# FASCICULE DE BREVET EUROPEEN

(11) **EP 1 600 347 B1**
(45) Date de publication et mention de la délivrance du brevet: **25.12.2013**
(21) Numéro de dépôt: 05011086.5
(22) Date de dépôt: 23.05.2005
(51) Int. Cl.: B60T 8/40, B60T 7/04, B60T 11/20

(54) **Simulateur d'actionnement de frein, maître-cylindre pour frein de vehicule automobile, et procede de commande de ce simulateur**
Bremspedalsimulator, Hauptbremszylinder für ein Fahrzeug und Verfahren zur dessen Steuerung
Brake pedal simulator, master cylinder for a vehicle and method of operation of said simulator

(30) Priorité: 27.05.2004 FR 0405760
(43) Date de publication de la demande: 30.11.2005
(73) Titulaire: ROBERT BOSCH GMBH, 70442 Stuttgart (DE)
(72) Inventeur: Pasquet, Thierry, 93190 Livry Gargan (FR)

(56) Documents cités:
- DE-A- 3 830 836
- DE-A- 19 748 182
- US-B1- 6 267 208

## Description

La présente invention concerne un maître-cylindre pour frein de véhicule automobile, et son procédé de commande.

Elle concerne en particulier un frein électro-hydraulique pour véhicule automobile. Ce frein permet notamment un freinage plus rapide et plus efficace et comprend des moyens formant capteur de la course de la pédale de frein et/ou de la pression exercée par le conducteur sur celle-ci. Ces moyens formant capteur commandent le freinage électriquement.

Généralement, de tels freins sont équipés d'un simulateur d'actionnement de frein, destiné à donner au pied du conducteur la même sensation que lors d'un freinage de type hydraulique. Pour cela, ce simulateur est équipé de moyens résistants permettant de simuler la résistance d'un maître cylindre classique lors d'une pression exercée par le conducteur sur la pédale de frein. Ces moyens résistants comprennent par exemple un ressort s'opposant au déplacement d'un piston.

Ainsi on connaît déjà dans l'état de la technique, notamment d'après FR 2 772 706, un simulateur d'actionnement de frein, du type comprenant une partie mobile déplaçable par rapport à une partie fixe sous l'effet de l'actionnement du frein, et des moyens s'opposant au déplacement de la partie mobile, dits moyens résistants.

On connaît également les documents DE 38 30 836 A1 et DE 197 48 182 A2.

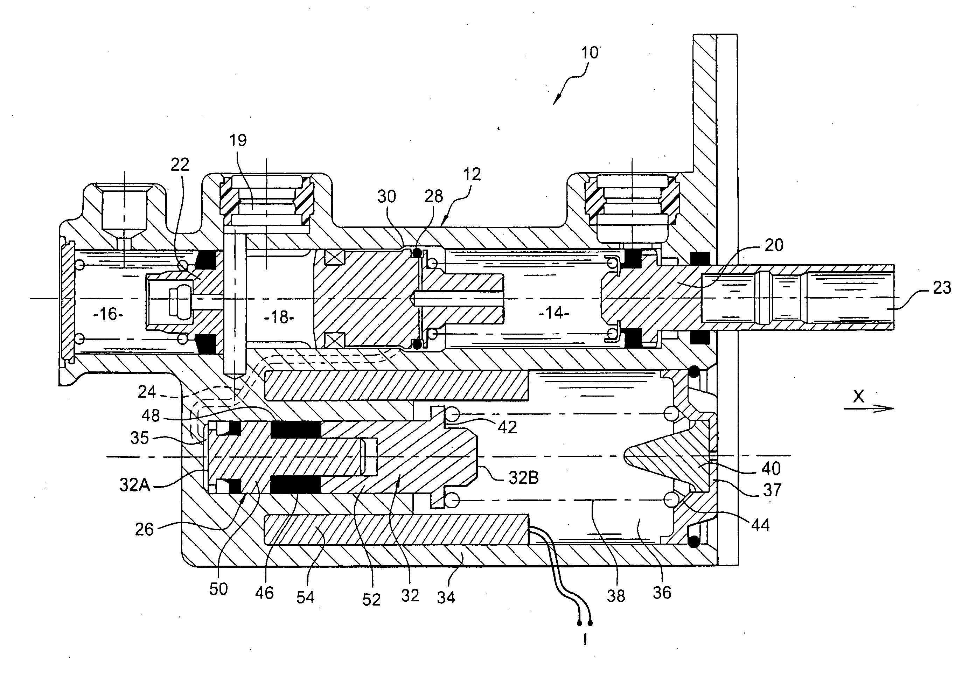

Le document DE 38 30 836 A1 décrit un dispositif de simulation de force installé en parallèle sur un dispositif tel qu'un vérin à deux chambres opposées dans lesquelles un piston 12-13 se déplace en refoulant de liquide 8 d'une chambre à l'autre en passant dans des étranglements entre le piston et les parois de la chambre ou dans un chemin de dérivation (figure 1 ou figure 2). Mais il s'agit ici de l'échange de fluide entre les deux côtés du piston ou les deux "chambres" de part et d'autre du piston et non pas un simulateur d'actionnement de frein relié par un canal unique 24 à la chambre primaire d'un maître-cylindre.

Le document DE 197 48 182 A1 décrit un système de freins de véhicule par câble avec sur l'articulation de la pédale 2, un moyen rhéologique d'adaptation souple de la caractéristique course/force de la pédale d'actionnement (pédale de frein) 1 à une courbe prédéfinie grâce à un moyen d'amortissement sous forme d'un amortisseur magnétorhéologique 10. Ce dispositif concerne l'articulation de la pédale de frein et non un simulateur d'actionnement de frein d'une part combiné au maître-cylindre et d'autre part fonctionnant sur le principe magnétostrictif.

La présente invention a pour but de perfectionner un tel maître-cylindre en fournissant des moyens résistants permettant d'optimiser l'effet de simulation.

A cet effet, l'invention a pour objet un maître-cylindre équipé d'un simulateur d'actionnement de frein ayant les caractéristiques de la première revendication.

Ainsi, ces moyens de frottement peuvent créer des effets, s'ajoutant le cas échéant à ceux d'un ressort, pour optimiser la sensation de résistance ressentie par le conducteur qui appuie sur la pédale, afin de rendre cette sensation très proche de celle d'un freinage hydraulique classique.

De plus comme indiqué, les moyens de frottement peuvent être commandés par des moyens électriques prenant en compte au moins un paramètre choisi parmi la course d'une pédale de frein et la pression appliquée sur cette pédale par un utilisateur. Ces moyens électriques permettent de commander le simulateur selon une loi de commande optimisant la simulation.

Selon cet élément magnétostrictif peut, en se déformant sous l'effet d'un champ magnétique piloté par l'actionnement de la pédale de frein, faire varier les frottements s'opposant au déplacement de la pédale de frein.

La présente invention a également pour objet un maître-cylindre pour frein de véhicule automobile, tel que défini dans les revendications dépendantes.

La présente invention a enfin pour objet un procédé de commande d'un simulateur d'actionnement de frein du type précité, caractérisé en ce qu'il comprend une étape de pilotage des moyens électriques de commande dés moyens de frottement selon une loi de commande qui est une fonction d'au moins un paramètre choisi parmi la course d'une pédale de frein et la pression appliquée sur cette pédale par un utilisateur.

L'invention sera mieux comprise à la lecture de la description qui va suivre, donnée uniquement à titre d'exemple et faite en se référant à la figure unique qui est une vue en coupe longitudinale d'un maître cylindre comportant un simulateur d'actionnement de frein selon l'invention.

On a représenté sur la figure unique un maître cylindre, selon l'invention, notamment de type tandem, pour un système de freinage électro-hydraulique. Ce maître cylindre est désigné par la référence générale 10. Dans l'exemple décrit, le maître cylindre tandem 10 est du type à clapets.

Le maître cylindre 10 comprend un corps 12 délimitant deux chambres de mise sous pression de liquide de frein, appelées habituellement chambres de pression primaire 14 et secondaire 16.

Le corps 12 délimite également une chambre 18 d'alimentation de la chambre de pression secondaire 16. Cette chambre 18, appelée habituellement chambre d'alimentation secondaire, est raccordée à un réservoir de liquide de frein (non représenté) à l'aide de moyens classiques 19.

Le maître cylindre 10 comprend également deux pistons de pression primaire 20 et secondaire 22. Le piston primaire 20 est relié, de façon connue en soi, à une pédale de frein (non représentée) destinée à être actionnée par le conducteur, grâce à une tige de commande 23. Le piston secondaire 22 sépare les chambres de pression primaire 14 et secondaire 16.

Le maître cylindre 10 comprend encore des moyens 24 de raccordement hydraulique de la chambre de pression primaire à un simulateur 26 d'actionnement de frein selon l'invention.

Les moyens de raccordement hydraulique 24 sont obturables à l'aide d'un joint torique 28, porté par le piston secondaire 22, destiné à coopérer avec un siège annulaire d'appui 30 ménagé dans le corps 12. Le joint torique 28 et le siège d'appui 30 forment respectivement des moyens complémentaires mobiles et fixes d'obturation des moyens de raccordement 24.

Le simulateur 26 d'actionnement de frein comporte une partie mobile 32 formant un piston de simulation, ayant des première 32A et seconde 32B extrémités. Le piston de simulation 32 est monté déplaçable, sous l'effet de l'actionnement du frein, par rapport à une partie fixe 34, formant une partie du corps 12 du maître-cylindre 10. Cette partie fixe 34 délimite une chambre hydraulique 35 d'alimentation en liquide de frein du simulateur 26 et une chambre 36 de coulissement du piston de simulation. La première extrémité 32A du piston de simulation délimite la chambre d'alimentation 35 et la seconde extrémité 32B du piston de simulation s'étend dans la chambre de coulissement 36.

Les déplacements du piston de simulation 32 sont imposés par les variations de volume de la chambre d'alimentation 35.

La chambre de coulissement 36 est obturée par un couvercle 37 en vis à vis axialement de la seconde extrémité 32B du piston de simulation.

On notera que les pistons de simulation 32, de pression primaire 20 et de pression secondaire 22 sont déplaçables dans leurs chambres 36, 14, 16 respectives sensiblement parallèlement entre eux.

Le simulateur 26 d'actionnement de frein comporte des premiers et seconds moyens résistants destinés à s'opposer au déplacement du piston de simulation 32.

Les premiers moyens résistants, agencés entre la seconde extrémité 32B du piston de simulation et le couvercle 37, comprennent des moyens compressibles élastiquement comportant un ressort de compression 38 et une masse déformable 40, de préférence en élastomère.

Le ressort 38 est intercalé entre deux sièges d'appui 42, 44, portés respectivement par la seconde extrémité 32B du piston de simulation 32 et le couvercle 37 fixé sur la partie fixe 34.

La masse 40 est portée par le couvercle 37 et forme une butée déformable de fin de course du piston de simulation 32.

Les seconds moyens résistants comprennent des moyens de frottement agissant entre le piston de simulation 32 et la partie fixe 34.

De préférence, les moyens de frottement sont commandés par des moyens électriques comprenant par exemple un élément magnétostrictif 46, déformable sous l'effet d'un champ magnétique.

Dans l'exemple décrit, l'élément magnétostrictif 46, d'un seul tenant ou en plusieurs parties, est agencé sur la périphérie du piston de simulation 32. L'élément magnétostrictif 46 a une forme générale d'anneau sensiblement coaxial au piston de simulation 32 et est destiné à venir en contact de frottement avec la surface 48 de la partie fixe 34 délimitant la chambre de coulissement 36.

De préférence, l'élément magnétostrictif 46 comporte, sur sa surface en contact avec la surface 48, un revêtement anti-usure par exemple en Téflon.

L'élément magnétostrictif 46, en forme d'anneau, peut se déformer au moins dans la direction radiale. Toutefois, on notera que l'élément magnétostrictif 46 est intercalé entre deux parties télescopiques 50 et 52 du piston de simulation 32, cet agencement facilitant le montage de l'élément 46 sur le piston de simulation 32 et autorisant la déformation axiale de l'élément magnétostrictif.

Le champ magnétique destiné à déformer l'élément magnétostrictif 46 est créé par un enroulement électrique 54, logé dans la partie fixe 34, entourant le piston de simulation 32.

L'enroulement 54 est orienté et alimenté en courant de façon à créer un champ magnétique de direction X sensiblement parallèle à l'axe du piston de simulation 32 et à la direction de déplacement de ce piston 32. L'amplitude du champ magnétique varie en fonction du courant d'alimentation de l'enroulement.

De façon classique, il est prévu des moyens formant capteur de la course de la pédale de frein et de la pression exercée par le conducteur sur celle-ci.

Ainsi, l'invention permet de commander le simulateur 26 d'actionnement de frein notamment en pilotant les moyens électriques de commande des moyens de frottement selon une loi de commande qui est une fonction d'au moins un paramètre choisi parmi la course de la pédale de frein et la pression appliquée sur cette pédale par un utilisateur.

Ainsi, le pilotage peut être réalisé à l'aide de moyens de calcul classiques prenant en compte au moins un paramètre choisi parmi la course de la pédale de frein et la pression appliquée sur cette pédale par l'utilisateur pour réguler le courant d'alimentation de l'enroulement 54 en fonction de la loi de commande.

On décrira ci-dessous les principaux aspects du fonctionnement du maître-cylindre 10 liés à l'invention.

Dans les conditions normales, lorsque le conducteur du véhicule actionne la pédale de frein, celle-ci se déplace d'une certaine course et est soumise à une certaine pression, la course et la pression étant susceptible de varier en fonction du temps.

La course et la pression de la pédale sont transmises à la tige de commande 23 du maître cylindre 10 ce qui provoque le déclenchement du simulateur 26 d'actionnement de frein, dans le but de donner au conducteur une sensation similaire à celle ressentie lors d'une action de freinage sur un système hydraulique classique.

Plus particulièrement, le fonctionnement du simulateur 26 est le suivant.

La tige de commande 23 actionne le piston primaire 20 du maître-cylindre 10, ce qui engendre une augmentation de pression dans la chambre de pression primaire 14. Cette augmentation de pression provoque le refoulement du liquide de frein qui passe entre le joint torique 28 et le siège annulaire d'appui 30. Le liquide de frein est refoulé, grâce aux moyens de raccordement hydraulique 24, dans la chambre d'alimentation 35, du simulateur 26.

Ceci entraîne le déplacement du piston de simulation 32 à l'encontre du ressort de compression 38 qui renvoi au conducteur une sensation de résistance.

Par ailleurs, les moyens de frottement sont activés. L'élément magnétostrictif 46 se déforme de façon à créer des frottements dont l'intensité est avantageusement fonction d'au moins un paramètre choisi parmi la course de la pédale de frein et la pression appliquée sur cette pédale. Ces frottements s'opposant au déplacement du piston de simulation 32 renvoient au conducteur une sensation de résistance complétant celle renvoyée par le ressort de compression 38.

Pour plus de détails concernant les aspects classiques du fonctionnement du maître-cylindre dans les conditions normales ou des conditions dégradées, on pourra se référer au document FR 2 772 706.

On notera que la présente invention ne se limite pas au mode de réalisation précédemment décrit.

## Revendications

1. Maître-cylindre (10) de frein de véhicule automobile comportant au moins un piston primaire (20) relié à la pédale de frein et délimitant une chambre primaire (14) raccordée hydrauliquement (24) à un simulateur d'actionnement de frein (26), un simulateur constitué par un piston (32) monté mobile par sa première extrémité (32A) dans une chambre hydraulique (35) reliée à la chambre primaire (14) et par sa deuxième extrémité (32B) dans une chambre de coulissement (36), un ressort de compression (38) s'opposant au déplacement du piston (32) contre l'actionnement de la pédale de frein,
maître cylindre **caractérisé en ce qu'**il comprend :
- des moyens de frottement (46) agencés sur la périphérique du piston (32) en contact avec la surface délimitant la chambre de coulissement (36),
* les moyens de frottement (46) comprenant un élément magnétostrictif déformable sous l'effet d'un champ magnétique, et commandé par des moyens électriques prenant en compte au moins un paramètre choisi entre la course de la pédale de frein et la pression appliquée sur cette pédale par l'utilisateur.

2. Maître-cylindre de frein (10) selon la revendication 1,
**caractérisé en ce que**
l'élément magnétostrictif (46) a une forme générale d'anneau sensiblement coaxial au piston de simulation et déformable radialement.

3. Maître-cylindre de frein (10) selon la revendication 2,
**caractérisé en ce que**
la surface extérieure de l'élément magnétostrictif (46) comporte un revêtement anti-usure, notamment en Téflon (marque déposée).

4. Maître-cylindre de frein (10) selon la revendication 1,
**caractérisé en ce que**
le champ magnétique agissant sur l'élément magnétostrictif est créé par un enroulement électrique (54) autour du piston de simulateur (32).

5. Maître-cylindre de frein (10) selon la revendication 1,
**caractérisé en ce que**
le piston de simulateur (32) est composé de deux parties télescopiques (50, 52) et l'élément magnétostrictif (46) est intercalé entre ces deux parties télescopiques.

6. Maître-cylindre de frein (10) selon la revendication 1,
**caractérisé par**
une masse (40) déformable élastiquement formant une butée de fin de course du piston (32), à l'extrémité du logement du ressort (38).

7. Procédé de commande d'un maître-cylindre de frein (10) selon l'une quelconque des revendications 1 à 6,
**caractérisé en ce qu'**
il comprend une étape de pilotage des moyens électriques de commande des moyens de frottement (46) selon une loi de commande qui est fonction d'au moins un paramètre choisi parmi la course de la pédale de frein et la pression appliquée sur la pédale de frein par le conducteur.

## Patentansprüche

1. Hauptbremszylinder (10) für ein Kraftfahrzeug, der mindestens einen Primärkolben (20), der mit dem Bremspedal verbunden ist und eine an einen Bremsbetätigungssimulator (26) hydraulisch angeschlossene (24) Primärkammer (14) begrenzt, einen Simulator, der durch einen Kolben (32) gebildet wird, der mit seinem ersten Ende (32A) in einer mit der Primärkammer (14) verbundenen Hydraulikkammer (35) und mit seinem zweiten Ende (32B) in einer Gleitkammer (36) beweglich befestigt ist, eine Druckfeder (38), die entgegen einer Bremspedalbetätigung einer Verschiebung des Kolbens (32) entgegenwirkt, umfasst,
wobei der Hauptzylinder **dadurch gekennzeichnet ist, dass** er Folgendes umfasst:
- Reibmittel (46), die auf dem Umfang des Kolbens (32) in Kontakt mit der die Gleitkammer (36) begrenzenden Fläche angeordnet sind,
* wobei die Reibmittel (46) ein magnetostriktives Element umfassen, das unter Wirkung eines Magnetfelds verformbar ist und durch elektrische Mittel unter Berücksichtigung mindestens eines Parameters, ausgewählt aus dem Bremspedalweg und dem durch den Benutzer auf dieses Pedal ausgeübten Druck, betätigt wird.

2. Hauptbremszylinder (10) nach Anspruch 1,
**dadurch gekennzeichnet, dass**
das magnetostriktive Element (46) eine allgemeine Form eines zum Simulatorkolben im Wesentlichen koaxialen und radial verformbaren Rings aufweist.

3. Hauptbremszylinder (10) nach Anspruch 2,
**dadurch gekennzeichnet, dass**
die Außenfläche des magnetostriktiven Elements (46) eine verschleißfeste Beschichtung, insbesondere Teflon (eingetragenes Warenzeichen), umfasst.

4. Hauptbremszylinder (10) nach Anspruch 1,
**dadurch gekennzeichnet, dass**
das auf das magnetostriktive Element wirkende Magnetfeld durch eine elektrische Wicklung (54) um den Simulatorkolben (32) erzeugt wird.

5. Hauptbremszylinder (10) nach Anspruch 1,
**dadurch gekennzeichnet, dass**
der Simulatorkolben (32) aus zwei zusammenschiebbaren Teilen (50, 52) besteht und das magnetostriktive Element (46) zwischen diesen beiden zusammenschiebbaren Teilen angeordnet ist.

6. Hauptbremszylinder (10) nach Anspruch 1,
**gekennzeichnet durch**
eine elastisch verformbare Masse (40), die am Ende der Federaufnahme (38) einen Endanschlag für den Kolben (32) bildet.

7. Verfahren zur Betätigung eines Hauptbremszylinders (10) nach einem der Ansprüche 1 bis 6,
**dadurch gekennzeichnet, dass**
es einen Schritt des Ansteuerns der elektrischen Mittel zur Betätigung der Reibmittel (46) gemäß einem Steuergesetz, das von mindestens einem Parameter, ausgewählt aus dem Bremspedalweg und dem durch den Fahrer auf das Bremspedal ausgeübten Druck, abhängt, umfasst.

## Claims

1. Motor vehicle brake master cylinder (10) comprising at least one primary piston (20) connected to the brake pedal and delimiting a primary chamber (14) connected hydraulically (24) to a brake actuation simulator (26), a simulator formed by a piston (32) mounted movably by its first end (32A) in a hydraulic chamber (35) connected to the primary chamber (14) and by its second end (32B) in a sliding chamber (36), a compression spring (38) opposing the movement of the piston (32) counter to the actuation of the brake pedal,
which master cylinder is **characterized in that** it comprises:
- friction means (46) arranged on the periphery of the piston (32) in contact with the surface delimiting the sliding chamber (36),
* the friction means (46) comprising a magnetostrictive element which is deformable under the effect of a magnetic field and controlled by electric means taking into account at least one parameter chosen from the travel of the brake pedal and the pressure applied to this pedal by the user.

2. Brake master cylinder (10) according to Claim 1, **characterized in that** the magnetostrictive element (46) has a general ring shape substantially coaxial to the simulation piston and deformable radially.

3. Brake master cylinder (10) according to Claim 2, **characterized in that** the outer surface of the magnetostrictive element (46) comprises an anti-wear coating, in particular made of Teflon (registered trade mark).

4. Brake master cylinder (10) according to Claim 1, **characterized in that** the magnetic field acting on the magnetostrictive element is created by an electric winding (54) around the simulator piston (32).

5. Brake master cylinder (10) according to Claim 1, **characterized in that** the simulator piston (32) is composed of two telescopic parts (50, 52) and the magnetostrictive element (46) is inserted between these two telescopic parts.

6. Brake master cylinder (10) according to Claim 1, **characterized by** an elastically deformable mass (40) forming an end-of-travel stop for the piston (32), at the end of the housing of the spring (38).

7. Method for controlling a brake master cylinder (10) according to any one of Claims 1 to 6, **characterized in that** it comprises a step of operating the electric means for controlling the friction means (46) according to a control law which is a function of at least one parameter chosen from the travel of the brake pedal and the pressure applied to the brake pedal by the driver.
